# EUROPÄISCHE PATENTANMELDUNG

(11) **EP 3 944 898 A2**
(43) Veröffentlichungstag der Anmeldung: **02.02.2022**
(21) Anmeldenummer: 21184572.2
(22) Anmeldetag: 08.07.2021
(51) Int. Cl.: B02C 13/10, B02C 13/13, B02C 15/00, B02C 15/08, C02F 11/121

(54) **VERFAHREN UND VORRICHTUNG ZUR MECHANISCHEN DESINTEGRATION VON KLÄRSCHLAMM**

(30) Priorität: 28.07.2020 DE 202020104352 U
(71) Anmelder: ADS Advanced Diagnosis Systems AG, 9493 Mauren (LI)
(72) Erfinder: SCHUSTER, Siegfried, 88131 Lindau (DE)
(74) Vertreter: Rupprecht, Kay

(57) **Zusammenfassung**

Die vorliegende Erfindung betrifft ein Verfahren zur mechanischen Desintegration von Klärschlamm, sowie eine Vorrichtung zur mechanischen Desintegration von Klärschlamm und/oder zur Durchführung des Verfahrens. Hierbei weist das Verfahren folgende Verfahrensschritte auf:
- Einbringen von zu desintegrierendem Klärschlamm in einen Behälter;
- Beaufschlagen des Klärschlamms mit mechanischem Druck und mahlender Reibung;
- Austragen des desintegrierten Klärschlamms aus dem Behälter.

Angesichts der Problemstellung, ein solches Verfahren sowie eine entsprechende Vorrichtung bereitzustellen, die es erlauben, verschleißarm und energieeffizient große Mengen Klärschlamm zu desintegrieren, ist für das Verfahren vorgesehen, dass die mechanische Desintegration in dem Behälter unter Zugabe mindestens eines mechanisch wirkenden Desintegrationshilfsstoffs erfolgt.

## Beschreibung

Die Erfindung betrifft ein Verfahren sowie eine Vorrichtung zur mechanischen Desintegration von Klärschlamm.

Klärschlamm ist ein Abfallprodukt aus der abgeschlossenen Behandlung von Abwasser in Kläranlagen, welches aus Wasser, Zellen von Mikroorganismen, sowie organischen und mineralischen Stoffen besteht, die wiederum in gelöster und fester Form vorliegen. Nach der Verordnung über die Verwertung von Klärschlamm (AbfKlärV) in der derzeit gültigen Fassung ist ein aus Klärschlamm gewonnener Stoff *"kein Klärschlamm"* im Sinne von §2(2) Satz 2 AbfKlärV, wenn er *"durch Behandlungsverfahren so verändert worden ist, dass klärschlammtypische, stoffcharakteristische Merkmale nicht mehr vorhanden sind".* Als Behandlungsverfahren gelten gemäß §2(9) AbfKlärV *"Maßnahmen zur biologischen, physikalischen oder chemischen Stabilisierung von Klärschlamm",* und diese Stabilisierungsmaßnahmen werden auch als "Desintegration" bezeichnet. Die Desintegration des Klärschlamms dient unter anderem dem Aufschließen von Zellen von Mikroorganismen, um Zellinhaltsstoffe freizusetzen, u.a. Phosphorverbindungen, die laut §3(1) AbfKlärV aus dem Klärschlamm zurückgewonnen werden sollen. Darüber hinaus ist eine effektive Desintegration des Klärschlamms auch im Hinblick auf dessen weitere Verwendung nach der Desintegration, beispielsweise zum Verbrennen in Heizkraftwerken, sehr erstrebenswert.

J. Müller et al., "Verfahren und Anwendungsgebiete der mechanischen Klärschlammdesintegration", Arbeitsbericht der ATV-Arbeitsgruppe 3.1.6 "Klärschlammdesintegration", Korrespondenz Abwasser 47/4, Seiten 570 bis 576, offenbart verschiedene Vorrichtungen zur mechanischen Desintegration von Klärschlamm, unter anderem eine Rührwerkskugelmühle. Der Mahlbehälter der Rührwerkskugelmühle enthält als Mahlkörper eine Vielzahl von Kugeln aus verschleißfestem Material, welche durch Rührscheiben in Rotationsbewegung und eine Relativbewegung zueinander versetzt werden, wodurch die Kugeln den zu behandelnden Klärschlamm mechanisch bearbeiten. Die in J. Müller et al. beschriebene Rührwerkskugelmühle ist für den Labormaßstab ausgelegt, da deren Kugeln lediglich einen Durchmesser von 0,1 bis 2,0 mm aufweisen.

Ein genereller Nachteil des Arbeitsprinzips einer Rührwerkskugelmühle ist, dass das Bewegen des Gewichts der Vielzahl von Kugeln innerhalb des Mahlbehälters relativ viel zusätzliche Energie beim Betrieb der Rührwerkskugelmühle erfordert. Darüber hinaus geht Energie durch das Zusammenstoßen und Aneinanderreiben von Kugeln verloren. Ferner scheint es nicht ratsam, die in J. Müller et al. offenbarte Rührwerkskugelmühle für einen industriellen Einsatz in den Dimensionen zu vergrößern. Denn durch die Kugeln kommt es zu Punkteinschlägen auf die Innenwandung des Mahlbehälters, wodurch dieser stark mechanisch beansprucht wird, da relativ viel Kraft über eine kleine Fläche ausgeübt wird, insbesondere wenn die Kugeln für den industriellen Einsatz vergrößert werden und damit ihr Gewicht steigt.

Schließlich ist es bekannt, dass es schwierig ist, die Zellen im Klärschlamm rein mechanisch energieeffizient zu öffnen. Mit der vorstehend beschriebenen Rührwerkskugelmühle sowie mit anderen Vorrichtungen kann zwar ein hoher Druck erzeugt und eine Zellöffnung erreicht werden, allerdings mit nur einem wirtschaftlich nicht vertretbaren Energieaufwand. Das liegt im Wesentlichen daran, dass die Zellen insbesondere nach dem Vortrocknen des Klärschlamms mit der einhergehenden Gewichtsreduzierung weicher geworden sind, so dass - ähnlich einem Luftballon, dem bereits ein Teil der Luft entwichen ist - ein Aufplatzen des Zellmantels durch Druck nur schwer zu erreichen ist.

Aufgabe der vorliegenden Erfindung ist es, ein Verfahren sowie eine Vorrichtung zur mechanischen Desintegration von Klärschlamm bereitzustellen, die es erlauben, verschleißarm und energieeffizient große Mengen Klärschlamm zu desintegrieren, um Zellinhaltsstoffe und Zellwasser freizusetzen, eine Zurückgewinnung der Phosphorverbindungen zu ermöglichen und dabei eine nach §2(2) Satz 2 AbfKlärV nicht mehr als Klärschlamm zu bezeichnende Reststoffmasse zu erzeugen.

Diese Aufgabe wird gelöst durch ein Verfahren zur mechanischen Desintegration von Klärschlamm gemäß Patentanspruch 1 und durch eine Vorrichtung zur Durchführung des Verfahrens nach Anspruch 4. Bevorzugte Ausführungsformen des erfindungsgemäßen Verfahrens sowie der erfindungsgemäßen Vorrichtung werden in den Unteransprüchen definiert.

Dabei sieht das erfindungsgemäße Verfahren folgende Verfahrensschritte vor:
- Einbringen von zu desintegrierendem Klärschlamm in einen Behälter;
- Beaufschlagen des Klärschlamms mit mechanischem Druck und mahlender Reibung;
- Austragen des desintegrierten Klärschlamms aus dem Behälter;
wobei dieses Verfahren dadurch gekennzeichnet ist, dass die mechanische Desintegration in dem Behälter unter Zugabe mindestens eines mechanisch wirkenden Desintegrationshilfsstoffs erfolgt.

Im Rahmen der vorliegenden Erfindung werden die Begriffe "Behälter" und "Gehäuse" synonym verwendet.

Ebenfalls im Rahmen der vorliegenden Erfindung wird unter einem mechanisch wirkenden Desintegrationshilfsstoff ein Stoff oder Stoffgemisch verstanden, der bzw. das durch die mechanischen Stoffeigenschaften dazu beiträgt, die Klärschlammzellen durch mechanische Kraft-, Reiß- oder Schneideinwirkung aufzuschließen und damit zu desintegrieren, wodurch die Zellinhaltsstoffe freigesetzt werden.

Bevorzugt sind Desintegrationsstoffe mit einer Teilchengröße von 0,05 mm bis 5 mm, besonders bevorzugt einer Größe von 0,1 mm bis 3 mm, noch mehr bevorzugt mit einer Teilchengröße von 04 mm bis 2,5 mm, und insbesondere bevorzugt einer Größe von 0,5 mm bis 2 mm. Die Bestimmung der Teilchengrößen kann in an sich bekannter Weise mittels optischer Methoden, insbesondere per Laserbeugung erfolgen.

Mithin sind erfindungsgemäß im Prinzip fast beliebige mechanisch wirkende Desintegrationshilfsstoffe verwendbar, solange diese dazu geeignet sind, die mechanische Zerkleinerung des Klärschlamms, insbesondere der pflanzlichen und tierischen Zellen im Klärschlamm, durch die erfindungsgemäße Vorrichtung zu unterstützen.

Denkbar ist auch, dass zwei, drei, vier oder mehr mechanisch wirkende Desintegrationshilfsstoffe zusammen verwendet werden. Dabei wird die Menge des insgesamt zuzuführenden Desintegrationshilfsstoffs für einen Desintegrations-prozess von mehreren Variablen bestimmt, wie zum Beispiel die Dauer der mechanischen Beaufschlagung des Klärschlamms, der durch die mechanische Beaufschlagung auf die Klärschlammzellen ausgeübte Druck, die Mahlgeschwindigkeit, die Kantenbeschaffenheit des Desintegrationshilfsstoffs, und andere. Eine in Versuchsanlagen mit nachstehend noch beschriebenen, vorzugsweisen Desintegrationshilfsstoffen bereits sehr effektive Beimischungsmenge eines Desintegrationshilfsstoffs war 1% der Klärschlammmenge.

In besonders bevorzugten Varianten sind die mechanisch wirkenden Desintegrationshilfsstoffe relativ hitzebeständig ausgebildet, so dass diese, wenn sie mit dem Klärschlamm zusammen aus der Vorrichtung ausgetragen und bei der weiteren Aufarbeitung zugegen sind, bei einer Verbrennung des abgepressten Klärschlamms im Feuerraum nicht verschmelzen. Die typische Kesseltemperatur bei der Verbrennung von Klärschlamm liegt im Bereich zwischen 800 und 1000°C.

Es ist vorteilhaft, wenn die mechanisch wirkenden Desintegrationshilfsstoffe relativ scharfkantig sind, da dies bei der Zerstörung der Zellen im Klärschlamm hilft, die Zellen zu "zerreißen" bzw. zu "zerschneiden", wohingegen abgerundete oder sphärische mechanisch wirkende Desintegrationshilfsstoffe die Zellen eher "zerdrücken" bzw. ein "Zerplatzen" der Zellen bewirken, was wesentlich höhere Energieeinträge erfordert.

Gleichwohl sind grundsätzlich sowohl (scharf-)kantige mechanisch wirkende Desintegrationshilfsstoffe als auch solche ohne (scharfe) Kanten, sondern mit abgerundeten Kanten oder sphärischer Struktur von der vorliegenden Erfindung umfasst, welche dann bei der Verwendung brechen und dadurch scharfe Kanten erhalten. Bevorzugt werden jedoch wegen der deutlich höheren Effektivität beim Aufschließen der Klärschlammzellen solche Bruchmaterialien, welche dem Desintegrationsprozess bereits mit scharfen Bruchkanten zugegeben werden oder diese Bruchkanten beim Desintegrationsprozess erhalten.

Als mechanisch wirkende Desintegrationshilfsstoffe einsetzbar sind beispielsweise sandartige, gebrochene, harte Mineralien mit einer Hitzebeständigkeit höher als die Verbrennungstemperatur des Klärschlamms, die bei etwa 800 bis 1000°C liegt. Mineralien wie beispielsweise Sand, insbesondere Quarzsand, Granitsand usw., aber auch Glasabfälle und ähnliche Abfall- und Reststoffe sowie grobkörnige Asche und Verarbeitungsreste aus der Herstellung von Beton, Keramik usw. sind ebenfalls unter den gleichen Rahmenbedingungen als mechanisch wirkende Desintegrationshilfsstoffe sehr geeignet.

Aus naheliegenden Gründen ist es im Rahmen der vorliegenden Erfindung bevorzugt, als mechanisch wirkende Desintegrationshilfsstoffe nur solche zu verwenden, die ungiftig sind bzw. die Umwelt nicht belasten und bei der Verbrennung des Klärschlamms keine giftigen Gase freisetzen.

Es ist einerseits möglich geeignete mechanisch wirkende Desintegrationshilfsstoffe zu kaufen und dann in dem erfindungsgemäßen Verfahren einzusetzen. Es ist aber ebenso gut möglich, die mechanisch wirkenden Desintegrationshilfsstoffe aus geeigneten Ausgangsmaterialien herzustellen, z.B. durch das Brechen zwischen zwei Walzen, wodurch nahezu beliebige Teilchengrößen erzielt werden können.

In bevorzugten Ausführungsformen der vorliegende Erfindung wird der mechanisch wirkende Desintegrationshilfsstoff ausgewählt aus der Gruppe bestehend aus Sand, Quarzsand, Granitsand, Glas, Keramik, grobkörniger Asche, Verarbeitungsresten aus der Beton- und Keramikherstellung und Mischungen davon, bevorzugt wiederum ausgewählt aus der Gruppe bestehend aus Sand, Quarzsand, Granitsand, Glas, Keramik und Mischungen davon, besonders bevorzugt jeweils mit einer Teilchengröße von 0,4 mm bis 2,5 mm, noch mehr bevorzugt Quarzsand, insbesondere bevorzugt Quarzsand mit einer Teilchengröße von 0,5 mm bis 2 mm.

Verbindet man die Herstellung der mechanisch wirkenden Desintegrationshilfsstoffe mit einer Dosiereinrichtung, zum Beispiel mit einer Zellradschleuse, kann unmittelbar mit der Aufgabe des Klärschlamms eine beliebige Dosierung erreicht werden.

Die Zudosierung der mechanisch wirkenden Desintegrationshilfsstoffe zum Klärschlamm kann im Rahmen der vorliegenden Erfindung prinzipiell in drei verschiedenen Stadien erfolgen:
I) vor Eintrag in den Behälter bzw. das Gehäuse, wobei diese Zudosierung bevorzugt unter inniger Vermischung erfolgt; oder
II) gleichzeitig während des Eintrags des Klärschlamms in den Behälter bzw. das Gehäuse, also ein Eintrag der mechanisch wirkenden Desintegrationshilfsstoffe durch eine Dosiervorrichtung in den Behälter gleichzeitig mit dem Klärschlamm, zum Beispiel durch eine Zellradschleuse; hierbei erfolgt die innige Vermischung dann mit dem mechanischem Druck und der mahlenden Reibung des erfindungsgemäßen Desintegrations-verfahrens und, falls zugegen, zusätzlich mittels eines rotorblattförmigen Dosierelements; oder
III) möglichst kurz hinter einer Eintragsöffnung, durch welche der zu desintegrierende Klärschlamm in den Behälter bzw. das Gehäuse gelangt, und mithilfe eines vorzugsweise einzusetzenden rotorblattförmigen Dosierelements, wobei dann die innige Vermischung mit Hilfe des mechanischen Drucks und der mahlenden Reibung des erfindungsgemäßen Desintegrationsverfahrens erfolgt.

Im Rahmen der vorliegenden Erfindung ist insbesondere Variante II) bevorzugt, da diese technisch und wirtschaftlich am besten umzusetzen ist.

In anderen bevorzugten Ausgestaltungen der vorliegenden Erfindung können die Varianten I), II) und/oder III) kombiniert sein bzw. werden.

Die Zudosierung der mechanisch wirkenden Desintegrationshilfsstoffe kann kontinuierlich, diskontinuierlich oder auch intermittierend erfolgen.

Im Rahmen der vorliegenden Erfindung wurde gefunden, dass, im Falle der Verwendung von sandartigen oder sandähnlichen Materialien wie beispielsweise Quarzsand als mechanisch wirkendem Desintegrationshilfsstoff, dieser während des Aufschlussprozesses zusätzlich gebrochen wurde, so dass bei einer anschließenden Verbrennung davon ausgegangen werden kann, dass der Quarzsand mit der Asche aus dem Bett bzw. aus der Feuerung sowohl bei Rostfeuer als auch Wirbelschichtfeuerung mit der Asche bzw. der Flugasche ausgetragen wird.

Des Weiteren wird durch weitere Brechung des mechanisch wirkenden Desintegrationshilfsstoffs eine zusätzliche Schärfung der Teilchen verursacht, was den Aufschließprozess im Hinblick auf dessen Effektivität sehr positiv beeinflusst.

Beim Verbrennungsvorgang können kleine Quarzkörner mit Asche verglasen. Diese Materialien können, insbesondere nach erneuten Aufbruch, wieder neuen zu desintegrierenden Chargen von Klärschlamm zugeschlagen werden, so dass Kosten für den mechanisch wirkenden Desintegrationshilfsstoff eingespart werden können.

Die Aufarbeitung des mittels der erfindungsgemäßen Vorrichtung bzw. mittels des erfindungsgemäßen Verfahrens zerkleinerten Klärschlamms erfolgt mittels üblicher, fachbekannter Maßnahmen. Im Wesentlichen sind dies die Verfahrensschritte des
- Trocknens, bevorzugt über Pressen, insbesondere mittels Filterpressen, oder mittels Zentrifugen oder dergleichen,
- Verbrennens,
- Deponierens und/oder
- Verwertens.

Die zugefügten mechanisch wirkenden Desintegrationshilfsstoffe können abgetrennt werden oder im Endprodukt verbleiben, je nach deren genauer Natur und des geplanten weiteren Schicksals des desintegrierten Klärschlamms.

Sofern im Trocknungsschritt das Wasser abgetrennt wird, kann dies fachüblich durch Abpressen oder mittels Zentrifugalkraft erfolgen. Dieses Wasser steht dann zur Aufbereitung und insbesondere einem Verfahren zur Phosphorrückgewinnung zur Verfügung.

Sofern der getrocknete Rest des Klärschlamms verbrannt werden soll, kann dies unter Zugabe weiterer Brennstoffe erfolgen; diese Verbrennung kann beispielsweise in Heizkraftwerken der Energiegewinnung dienen, der getrocknete Klärschlamm mithin einen kalorischen Mehrwert darstellen. Der Verbrennungsrückstand kann in bevorzugten Ausgestaltungen als Bauzusatzstoff, Füllmittel oder Streumittel, beispielsweise für Winterdienste, eingesetzt werden (sofern der Verbrennungsrückstand keine umweltschädlichen Stoffe enthält).

Insofern schließen sich an das Verfahren der vorliegenden Erfindung in bevorzugten Ausgestaltungen noch die Schritte der Trocknung des desintegrierten Klärschlamms, bevorzugt mittels Filterpressen, und der Verbrennung des getrockneten Klärschlammrückstandes zur Energiegewinnung an.

Zu diesem Zweck können dem Behälter bzw. dem Gehäuse, in welchem sich der zu desintegrierende Klärschlamm zu Beginn des mechanischen Desintegrationsverfahrens befindet, eine Trocknungseinheit und eine Verbrennungseinheit nachgeschaltet sein.

In vorteilhafter Weiterbildung des erfindungsgemäßen Verfahrens wird die Desintegration des Klärschlamms noch durch weitere Verfahrensschritte unterstützt, beispielsweise durch
weitere mechanische Behandlung des Klärschlamms,
thermische Behandlung des Klärschlamms,
biologische Behandlung des Klärschlamms,
chemische Behandlung des Klärschlamms,
insbesondere innerhalb des Behälters bzw. des Gehäuses durch Ultraschallbehandlung des Klärschlamms,
Erhitzung des Behälters bzw. des Gehäuses,
Zersetzung durch Mikroorganismen, bevorzugt durch Zugabe solcher Organismen vor oder während des Eintrags des Klärschlamms in die Vorrichtung,
chemische Zersetzung oder Umsetzung durch Chemikalien, bevorzugt durch Zugabe solcher Chemikalien vor oder während des Eintrags des Klärschlamms in die Vorrichtung.

Im Rahmen der vorliegenden Erfindung wurde also gefunden, dass die Zugabe von geeigneten mechanisch wirkenden Desintegrationshilfsstoffen bei der mechanischen Desintegration von Klärschlamm, insbesondere mittels der erfindungsgemäßen Vorrichtung, den Energieaufwand in hohem Maße verringert, eine Desintegration auch ohne Chemie ermöglicht (obwohl eine Kombination möglich ist) und sowohl bei dünnflüssigem Klärschlamm als auch bei bereits abgepressten Klärschlamm möglich ist.

Ein Vorteil des mit dem erfindungsgemäßen Verfahren bzw. mit der erfindungsgemäßen Vorrichtung intensiv aufgeschlossenen Klärschlamms ist, dass bei einer nach der Desintegration folgenden Aufarbeitung, bevorzugt nach Abpressen mittels einer Filterpresse oder auch einer Entwässerung mittels einer Zentrifuge, ein Trockengehalt des Klärschlamms erzielbar ist, der eine selbstgängige Mono-Verbrennung zumindest in Wirbelschichtanlagen ermöglicht. Dabei kann die Zugabe von naturbelassenen Brennstoffen, z.B. Holz, Stroh, Landschaftspflegematerial, Reststoffen aus der Futter- und Lebensmittelherstellung etc., eine Verbrennung des abgepressten Klärschlamms mit höherem Wassergehalt ermöglichen, und die Phosphor-Rückgewinnung aus der Asche wird nicht behindert, was eine zusätzliche Energieeinsparung bewirkt. Die abgepresste Flüssigkeit (Zellwasser) kann durch Eindicken bzw. Ausfällen zur weiteren Phosphor-Rückgewinnung verwendet werden.

Ein weiterer Vorteil des Verfahrens der vorliegenden Erfindung ist, dass das Verfahren eine sehr hohe Entwässerung und Energieeinsparung ermöglicht und Transportaufwendungen und damit die Entsorgungskosten reduziert, sowie eine gute Phosphorrückgewinnung durch Ausfällung ermöglicht.

Schließlich ist es ein großer Vorteil des erfindungsgemäßen Verfahrens, dass sowohl das Trocknen als auch die Verbrennung des verfahrensgemäß durch das intensive Aufschließen der Klärschlammzellen bearbeiteten Klärschlamms wesentlich effektiver und einfacher vonstattengeht.

Zur Durchführung des Verfahrens oder anderer Verfahren ist eine Vorrichtung zur mechanischen Desintegration von Klärschlamm vorgesehen, mit einem rotationssymmetrischen Gehäuse, in welchem eine drehbar gelagerte Welle entlang der Rotationssymmetrieachse des rotationssymmetrischen Gehäuses angeordnet ist, wobei die drehbar gelagerte Welle eine Vielzahl von Schlagelementen mit einem Verbindungselement und einem Kopfteil aufweist, wobei das Verbindungselement das Kopfteil mit der Welle verbindet, und das Kopfteil die Innenwand des rotationssymmetrischen Gehäuses berührt oder ein Spaltmaß zwischen Kopfteil und der Innenwand des rotationssymmetrischen Gehäuses vorgesehen ist, wobei an dem rotationssymmetrischen Gehäuse eine Eintrittsöffnung zum Zuführen von Klärschlamm und eine oder mehrere Austrittsöffnungen zum Austrag von desintegriertem Klärschlamm angeordnet sind, und die Eintrittsöffnung und Austrittsöffnung(en) so an dem Gehäuse angeordnet sind, dass sich dazwischen mindestens ein Teil der Schlagelemente befindet, wobei der über die Eintrittsöffnung eingeführte Klärschlamm zu der bzw. den Austrittsöffnungen befördert wird und dabei durch Drehen der Welle mittels der Schlagelemente desintegriert wird.

Die der Erfindung zu Grunde liegende Idee besteht darin, den Klärschlamm mittels der Schlagelemente mechanisch aufzubrechen, wenn sich die Welle dreht. Dadurch, dass das Kopfteil des Schlagelements die Innenwand des rotationssymmetrischen Gehäuses berührt oder ein Spaltmaß zwischen dem Kopfteil und der Innenwand des rotationssymmetrischen Gehäuses vorgesehen ist, können im Klärschlamm befindliche Zellen von Mikroorganismen beim Drehen der Welle entweder zwischen dem Kopfteil des Schlagelements und der Innenwand des Gehäuses zerquetscht werden, oder die Zellen zerplatzen durch einen in dem Spaltmaß erzeugten hohen Druck bzw. durch Reibung.

Dadurch, dass das Kopfteil des Schlagelements die Innenwand des rotationssymmetrischen Gehäuses entweder berührt oder ein Spaltmaß dazwischen vorgesehen ist, kann in der erfindungsgemäßen Vorrichtung auf Kugeln als Mahlkörper verzichtet werden.

Die erfindungsgemäße Vorrichtung ist für feuchten bzw. flüssigen Klärschlamm geeignet. Je höher der Trockensubstanzgehalt des zu verarbeiteten feuchten bzw. flüssigen Klärschlamms, umso effizienter ist die Desintegration, da damit auch die Dichte an zu desintegrierendem Material steigt.

Das rotationssymmetrische Gehäuse kann im Prinzip jede rotationssymmetrische Form haben. Beispielsweise kann es eine Betonröhre sein, die bekanntlich billig herstellbar und nach Abnutzung ausgetauscht und sogar in dem erfindungsgemäßen Verfahren als Desintegrationshilfsstoff Verwendung finden kann.

Die Rotationssymmetrie des Gehäuses gewährleistet, dass das Kopfteil des Schlagelements beim Drehen der Welle entweder immer die Innenwand des Gehäuses kontaktiert oder ein eingestelltes Spaltmaß im Wesentlichen gleichbleibt. Bevorzugt ist das Gehäuse zylindrisch, kegelförmig oder kegelstumpfförmig. Ein zylindrisches Gehäuse hat den Vorteil, dass es relativ leicht mit hoher Maßpräzision herstellbar ist, da der Durchmesser über die gesamte Länge des Zylinders gleichbleibt. Ein kegelförmiges oder kegelstumpfförmiges Gehäuse hat den Vorteil, dass seine Seitenwände bereits eine Neigung aufweisen, der bei horizontaler Aufhängung des Gehäuses als Neigungswinkel zur Beförderung des Klärschlamms innerhalb des Gehäuses dienen kann.

Das Spaltmaß zwischen dem Kopfteil des Schlagelements und der Innenwand des rotationssymmetrischen Gehäuses ist vorzugsweise bis zu 0,5 mm, weiter bevorzugt 0,1 µm bis 100 µm, noch weiter bevorzugt 0,5 µm bis 50 µm, und besonders bevorzugt 1 µm bis 10 µm. Diese bevorzugten Spaltmaße ermöglicht, dass Zellen von im Klärschlamm befindlichen Mikroorganismen zwischen dem Kopfteil des Schlagelements und der Innenwand des Gehäuses zerquetscht werden, weil das Spaltmaß geringer als die Größe der Zellen ist, und/oder weil durch das geringe Spaltmaß in Verbindung mit dem Drehen der Welle innerhalb des im Spaltmaß befindlichen Klärschlamms ein hoher Druck und/oder eine hohe Reibung erzeugt wird, wodurch die Zellen zerplatzen.

Zwar ist es möglich auch bei Verwendung von mechanisch wirkenden Desintegrationshilfsstoffen die im vorhergehenden Absatz genannten Spaltmaße einzustellen und damit sehr effektiv den Klärschlamm zu desintegrieren, jedoch kann es in einem solchen Fall hilfreich sein, das Spaltmaß zu vergrößern. Demgemäß ist in weiteren bevorzugten Ausführungsformen der vorliegenden Erfindung, insbesondere, wenn mechanisch wirkende Desintegrationshilfsstoffe eingesetzt werden, das Spaltmaß bis zu 5 mm, bevorzugt 0,05 mm bis 3,5 mm, weiter bevorzugt 0,2 mm bis 2,5 mm, besonders bevorzugt 0,4 mm bis 2,1 mm.

Das Schlagelement erstreckt sich vorzugsweise radial von der drehbar gelagerten Welle Richtung Innenwand des rotationssymmetrischen Gehäuses. Alternativ ist das Schlagelement tangential an der drehbar gelagerten Welle angebracht und erstreckt sich Richtung Innenwand des rotationssymmetrischen Gehäuses.

Die Anzahl der Schlagelemente kann abhängig von der Größe der Vorrichtung und/oder der gewünschten Schnelligkeit der Desintegration beliebig gewählt werden. Vorzugsweise umfasst die erfindungsgemäße Vorrichtung bis zu 40 Schlagelemente, weiter bevorzugt 8 bis 30 Schlagelemente, noch weiter bevorzugt 12 bis 30 Schlagelemente, und besonders bevorzugt 16 bis 20 Schlagelemente.

Bevorzugt sind die Schlagelemente so an der drehbar gelagerten Welle angeordnet, dass zwei Schlagelemente an der drehbar gelagerten Welle gegenüberliegend angeordnet sind. Dies hat den Vorteil, dass keine Unwucht entsteht. Des Weiteren kann gemäß einer anderen vorteilhaften Weiterbildung vorgesehen sein, dass die Schlagelemente entlang der drehbar gelagerten Welle äquidistant angeordnet sind.

In anderen Varianten der vorliegenden Erfindung sind mehr als zwei Schlagelemente an einer, entlang der Wellenachse gesehen, gleichen Position der drehbar gelagerten Welle angeordnet, mit der Maßgabe, dass die einzelnen Schlagelemente an dieser Position äquidistant gleichmäßig über den Umfang der Welle verteilt sind.

Das Schlagelement ist bevorzugt in einem Winkel von im Wesentlichen 90° zur drehbaren Welle angeordnet, wobei "im Wesentlichen" hier eine Abweichung von plus/minus 20° bedeutet. Weiter bevorzugt ist das Schlagelement in einem Winkel von 90° zur drehbaren Welle angeordnet.

Das Schlagelement mit einem Verbindungsteil und einem Kopfteil kann prinzipiell beliebig gestaltet sein. Bevorzugt ist, dass das Schlagelement hammerförmig gestaltet ist. "Hammerförmig" heißt in diesem Kontext, dass das Kopfteil von der Dimensionierung her wie ein Hammerkopf größere Dimensionen aufweist als der hammerstielartige Verbindungsteil. Vorzugsweise ist das Gewicht des hammerkopfförmigen Kopfteils deutlich größer als das des hammerstielförmigen Verbindungsteils. Eine hammerförmige Ausgestaltung des Schlagelements hat den Vorteil, dass das Kopfteil des Schlagelements beim Berühren der Innenwand des rotationssymmetrischen Gehäuses mehr Fläche und mehr Kraft bereitstellen kann, um die im Klärschlamm befindlichen Zellen von Mikroorganismen zu zerquetschen, bzw. wenn ein Spaltmaß zwischen Kopfteil und Innenwand vorgesehen ist, wird die Reibung und/oder der Druck erhöht, wodurch die Zellen effizienter zerplatzen.

Die erfindungsgemäße Vorrichtung kann je nach Bedarf bzw. gewünschter Menge an zu verarbeitendem Klärschlamm dimensioniert werden. Bevorzugt weist das rotationssymmetrische Gehäuse einen Durchmesser von bis zu 7 m und eine Länge entlang der Rotationssymmetrieachse von bis zu 20 m auf, weiter bevorzugt einen Durchmesser von 1,5 m bis 5 m und eine Länge von 4 m bis 15 m, und besonders bevorzugt einen Durchmesser von 2 m bis 4 m und eine Länge von 5 m bis 9 m.

Das Verbindungsteil des Schlagelements kann prinzipiell mit beliebigen Befestigungsmitteln an der drehbar gelagerten Welle starr oder beweglich angebracht sein. Vorzugsweise wird das Verbindungsteil an der Welle mittels eines an der Welle angebrachten Flansches befestigt, weiter bevorzugt mittels ein Flansches mit mindestens einem Loch, welches zur Befestigung des Verbindungsteils und/oder des Federelements dient. Dabei ist beispielsweise eine starre Befestigung mit einem beliebigen Befestigungsmittel, z.B. einer Schraube oder Niete, möglich. Alternativ kann das mindestens eine Loch im Flansch zur Aufnahme einer Drehachse zur beweglichen Lagerung von Verbindungsteil und/oder Federelement dienen.

Das Kopfteil des Schlagelements kann einen drehbaren Rollkörper mit einer Drehachse im Wesentlichen parallel zur Rotationssymmetrieachse des rotationssymmetrischen Gehäuses aufweisen. Diese Ausführungsform hat den Vorteil, dass, wenn das Kopfteil die Innenwand des rotationssymmetrischen Gehäuses berührt, die Reibung zwischen dem Kopfteil und der Innenwand minimiert wird, und die im Klärschlamm befindlichen Zellen von Mikroorganismen dennoch zuverlässig zerquetscht werden. Aber auch wenn ein Spaltmaß zwischen Kopfteil und der Innenwand des rotationssymmetrischen Gehäuses vorgesehen ist, ist diese Ausführungsform vorteilhaft, da Klärschlamm neben Mikroorganismen auch andere feste Bestandteile aufweist, welche innerhalb des Spaltmaßes zu Reibung zwischen dem Kopfteil und der Innenwand führen, und diese Reibung kann beispielsweise durch ein Kopfteil in Form von einem drehbaren Rollkörper reduziert werden.

Vorzugsweise ist der drehbare Rollkörper zylindrisch, kegelförmig oder kegelstumpfförmig, weiter bevorzugt zylindrisch. Die Form des drehbaren Rollkörpers wird vorteilhafterweise im Hinblick auf die Form des rotationssymmetrischen Gehäuses angepasst, das heißt, dass ein zylindrischer drehbarer Rollkörper für ein zylindrisches Gehäuse, ein kegelförmiger Rollkörper für ein kegelförmiges Gehäuse, und ein kegelstumpfförmiger drehbarer Rollkörper für ein kegelstumpfförmiges Gehäuse. Durch diese Anpassung der Formen von drehbarem Rollkörper und Gehäuse kann die Drehachse des drehbaren Rollkörpers exakt parallel zur Rotationssymmetrieachse des rotationssymmetrischen Gehäuses ausgerichtet werden. Allerdings ist es alternativ auch möglich, die Drehachse des drehbaren Rollkörpers im Wesentlichen parallel zur Rotationssymmetrieachse des rotationssymmetrischen Gehäuses auszurichten, z.B., dass die Mantelfläche eines kegel- oder kegelstumpfförmigen drehbaren Rollkörpers die Innenseite eines zylindrischen Gehäuses vollständig, d.h. über die gesamte Länge der Mantellinie, berührt oder parallel dazu beabstandet ist. Auch ist es möglich, dass die Mantelfläche eines zylinderförmigen drehbaren Rollkörpers die Innenseite eines kegel- oder kegelstumpfförmigen Gehäuses vollständig, d.h. über die gesamte Länge der Mantellinie, berührt oder parallel dazu beabstandet ist.

Das Kopfteil des Schlagelements kann auch als starrer Körper ausgebildet sein, bevorzugt als zylindrischer, kegelförmiger, kegelstumpfförmiger oder keilförmiger starrer Körper, weiter bevorzugt als keilförmiger oder zylindrischer starrer Körper, und besonders bevorzugt als zylindrischer starrer Körper. Das Kopfteil des Schlagelements in Form eines zylindrischen, kegelförmigen oder kegelstumpfförmigen starren Körpers ist bevorzugt bezüglich seiner Rotationssymmetrieachse im Wesentlichen parallel zur Rotationssymmetrieachse des rotationssymmetrischen Gehäuses ausgerichtet, wobei die Bezeichnung "im Wesentlichen parallel" hier eine analoge Bedeutung hat wie oben für die drehbaren Rollkörper erläutert, mit dem Unterschied, dass statt der Drehachse eine starre Rotationssymmetrieachse vorliegt. Bei dem Kopfteil des Schlagelements in Form eines keilförmigen Körpers ist es hinsichtlich der Orientierung bevorzugt, dass der keilförmige Körper über seine eckige oder rechteckige Grundfläche mit dem Verbindungselement verbunden ist, und seine Kanten, bevorzugt die längeren Kanten, im Wesentlichen parallel zur Rotationssymmetrieachse des rotationssymmetrischen Gehäuses ausgerichtet sind, so dass die der eckigen oder rechteckigen Grundfläche gegenüberliegende Kante die Innenseite des rotationssymmetrischen Gehäuses vollständig, d.h. über die gesamte Länge dieser Kante, berührt oder parallel dazu beabstandet ist.

In anderen bevorzugten Varianten der vorliegenden Erfindung ist das Kopfteil des Schlagelements oder das ganze Schlagelement mit einem abriebfesten, harten Material beschichtet und/oder besteht aus einem abriebfesten, harten Material, insbesondere dann, wenn die erfindungsgemäße Vorrichtung bei der Desintegration von Klärschlamm im Zusammenwirken mit mechanisch wirkenden Desintegrationshilfsstoffen betrieben wird. In dieser Form sind die Schlagelemente besonders gut für die Desintegration von Klärschlamm mit Hilfe von mechanisch wirkenden Desintegrationshilfsstoffen und, optional, für die gleichzeitige in situ-Zerkleinerung (wodurch scharfkantige Körper entstehen) von mechanisch wirkenden Desintegrationshilfsstoffen geeignet.

Bei einer bevorzugten Ausführungsform des Kopfteils des Schlagelements sind jeweils seitlich vom Kopfteil Führungselemente angewinkelt angeordnet, so dass die Führungselemente bei Rotation der drehbar gelagerten Welle den Klärschlamm vor dem Kopfteil zusammenführen.

Die Führungselemente sind bevorzugt flächig ausgestaltet, weiter bevorzugt rechteckartig, trapezartig oder dreieckartig, besonders bevorzugt rechteckartig. Die Begriffe "rechteckartig", "trapezartig" oder "dreieckartig" bedeuten, dass die Form im Wesentlichen rechteckig, trapezartig oder dreieckig ist, aber die Kante, welche die Innenseite des Gehäuses berührt oder ein Spaltmaß zwischen Kante und Innenseite des Gehäuses vorsieht, so abgerundet geformt ist, dass sie der Form der Innenseite des Gehäuses angepasst ist. Eine flächige Ausgestaltung des Führungselements ermöglicht es, eine große Menge Klärschlamm effizient in pflugartiger Weise vor dem Kopfteil zusammenzuführen. Falls zwischen dem Führungselement und der Innenseite des Gehäuses ein Spaltmaß zwischen Kante und Innenseite des Gehäuses vorgesehen ist, so kann dieses Spaltmaß gleich dem Spaltmaß zwischen dem Kopfteil des Schlagelements und der Innenwand des Gehäuses sein, oder alternativ gleich dem Spaltmaß zwischen Abkratzelement und Innenwand des Gehäuses.

Bevorzugt sind die Führungselemente paarweise, jeweils an der Seite des Kopfteils, an welcher sich die Drehachse des drehbaren Rollkörpers befindet oder zu welcher hin die Rotationssymmetrieachse eines starren Kopfteils hin orientiert ist, angewinkelt angeordnet.

Das Schlagelement weist bevorzugt ein Abkratzelement auf, welches an dem Verbindungselement oder an dem Kopfteil angebracht und so gestaltet ist, dass es mit einer Kante in Berührung mit der Innenwand des rotationssymmetrischen Gehäuses kommt oder ein Spaltmaß zwischen einer Kante des Abkratzelements und der Innenwand des rotationssymmetrischen Gehäuses vorgesehen ist, um bei Rotation der drehbar gelagerten Welle mit der Kante Klärschlamm von der Innenwand des rotationssymmetrischen Gehäuses abzukratzen. Das Abkratzelement hat den Vorteil, dass z.B. festes Material des Klärschlamms, welches sich an der Innenseite des rotationssymmetrischen Gehäuses anlagern kann und zu erhöhter Reibung zwischen Kopfteil und der Innenseite des rotationssymmetrischen Gehäuses führt, effizient entfernt wird, wodurch eine geringere Reibung und damit ein geringerer Verschleiß und Energieverbrauch gewährleistet wird. Das Spaltmaß zwischen der Kante des Abkratzelements und der Innenwand des rotationssymmetrischen Gehäuses kann gleich oder verschieden von dem Spaltmaß zwischen Kopfteil des Schlagelements und der Innenwand des rotationssymmetrischen Gehäuses sein, bevorzugt sind diese Spaltmaße gleich gewählt.

Wenn das Spaltmaß zwischen der Kante des Abkratzelements und der Innenwand des rotationssymmetrischen Gehäuses verschieden vom Spaltmaß zwischen Kopfteil des Schlagelements und der Innenwand des rotationssymmetrischen Gehäuses gewählt ist, dann ist das Spaltmaß zwischen der Kante des Abkratzelements und der Innenwand des rotationssymmetrischen Gehäuses bevorzugt bis zu 1 cm, weiter bevorzugt bis zu 5 mm, und besonders bevorzugt bis zu 3 mm. Ein größeres Spaltmaß für die Abkratzelemente hat den Vorteil, dass für die Bereitstellung des Spaltmaßes weniger Präzision erforderlich ist, und dass im Falle von einem einstellbaren Abkratzelement, bei dem beispielsweise der Ausrichtwinkel der Kante des Abkratzelements veränderbar ist, beim Verändern des Ausrichtwinkels mehr Spiel vorhanden ist, um ein Berühren des Abkratzelements mit der Innenwand des rotationssymmetrischen Gehäuses und damit Reibung zu vermeiden.

Vorzugsweise ist das Abkratzelement im Nachlauf des Kopfteils angeordnet. Durch diese Anordnung im Nachlauf wird das Abkratzelement dem Kopfteil bei Rotation der Welle nachgeführt, so dass Klärschlamm, der sich durch Kontakt mit dem Kopfteil an der Innenwand des Gehäuses angesammelt bzw. verfestigt hat, im Nachgang durch das im Nachlauf angeordnete Abkratzelement von der Innenwand abgekratzt wird.

Das Abkratzelement kann im Prinzip jede Form aufweisen, solange diese Form eine Kante aufweist zur Berührung mit der Innenwand des rotationssymmetrischen Gehäuses oder zur Bereitstellung eines Spaltmaßes zwischen einer Kante des Abkratzelements und der Innenwand des rotationssymmetrischen Gehäuses.

Das Abkratzelement ist bevorzugt flächig ausgestaltet, weiter bevorzugt rechteckig, trapezförmig oder dreieckig, besonders bevorzugt rechteckig. Eine flächige Ausgestaltung des Abkratzelements ermöglicht es, eine große Menge Klärschlamm effizient von der Innenwand des rotationssymmetrischen Gehäuses abzukratzen.

Vorzugsweise ist die Kante des Abkratzelements im Wesentlichen parallel zur Drehachse des rotationssymmetrischen Gehäuses ausgerichtet. Die parallele Ausrichtung dient einem möglichst effizienten Abkratzen von Klärschlamm von der Innenwand des rotationssymmetrischen Gehäuses, wenn dieses in zylindrischer Form vorliegt, da hier die Kante des Abkratzelements, insbesondere wenn es sich um eine geradlinige Kante handelt, die Innenwand des rotationssymmetrischen Gehäuses vollständig berührt bzw. ein über die ganze Länge gleichbleibendes Spaltmaß ermöglicht.

In anderen bevorzugten Varianten der vorliegenden Erfindung ist das Abkratzelement mit einem abriebfesten, harten Material beschichtet und/oder besteht aus einem abriebfesten, harten Material, insbesondere dann, wenn die erfindungsgemäße Vorrichtung bei der Desintegration von Klärschlamm mit Hilfe von mechanisch wirkenden Desintegrationshilfsstoffen betrieben wird. In dieser Form sind die Abkratzelemente besonders gut für die Desintegration von Klärschlamm mit von mechanisch wirkenden Desintegrationshilfsstoffen geeignet.

Das Abkratzelement kann starr oder einstellbar an dem Verbindungselement oder dem Kopfteil angebracht sein. Eine starre Anbringung hat den Vorteil, dass sie einfach zu produzieren ist und keine Wartung bzw. weitere Vorrichtungsmittel wie z.B. Stellmotoren benötigt. Eine einstellbare Anbringung hat den Vorteil, dass man die Positionierung des Abkratzelements verändern kann. Bevorzugt ist das Abkratzelement einstellbar, um einen Ausrichtwinkel der Kante des Abkratzelements so zu verändern, dass der Klärschlamm durch das Abkratzelement zum nächsten Kopfteil oder zu der bzw. den Austrittsöffnung(en) gelenkt wird. Hierdurch kann das Abkratzelement neben der Abkratzfunktion auch den Klärschlamm von der Eintrittsöffnung zu der bzw. den Austrittsöffnung(en) befördern. Allerdings ist bei einstellbaren Abkratzelementen zu berücksichtigen, dass durch den veränderten Ausrichtwinkel der Kante, insbesondere im Fall einer geradlinigen Kante, die Kantenform die Innenwand des rotationssymmetrischen Gehäuses unter Umständen nicht mehr über die ganze Länge berühren kann bzw. ein nicht äquidistantes Spaltmaß zustande kommt.

Das Verbindungselement kann entweder ein starrer Körper sein, welcher starr bzw. unbeweglich an der drehbar gelagerten Welle befestigt ist, oder es kann an der drehbar gelagerten Welle beweglich gelagert sein. Ein Verbindungselement in Form eines starren Körpers hat den Vorteil, dass er einfach zu produzieren ist und innerhalb der Vorrichtung keine Wartung erfordert. Ein beweglich gelagertes Verbindungselement hat den Vorteil, dass dadurch die durch das Kopfteil des Schlagelements auf die Innenwand des rotationssymmetrischen Gehäuses ausgeübte Kraft eingestellt werden kann.

Unabhängig davon, ob das Verbindungselement beweglich gelagert oder starr ist, weist das Verbindungselement bevorzugt eine stabförmige Form auf. Die stabförmige Form ist vorzugweise ein länglicher Körper mit runden oder mehreckigem, bevorzugt vier- oder rechteckigem Profil.

Das beweglich gelagerte Verbindungselement ist vorzugsweise durch eine Drehachse im Wesentlichen parallel zur Rotationssymmetrieachse des rotationssymmetrischen Gehäuses beweglich gelagert, wobei "im Wesentlichen parallel" hier eine Abweichung von plus/minus_20° von der Parallelität zur Rotationssymmetrieachse des rotationssymmetrischen Gehäuses bedeutet. Bevorzugt ist das beweglich gelagerte Verbindungselement durch eine Drehachse parallel zur Rotationssymmetrieachse des rotationssymmetrischen Gehäuses beweglich gelagert. Durch diese Art der beweglichen Lagerung kann die durch das Kopfteil des Schlagelements auf die Innenwand des rotationssymmetrischen Gehäuses bei Rotation der Welle durch die Fliehkraft entstehende hohe Kraft bei der Berührung des Kopfteils mit der Innenwand bereitgestellt werden.

Bevorzugt weist das beweglich gelagerte Verbindungselement ein Federelement auf. Das Verbindungselement kann beispielsweise entweder selbst ein Federelement sein, oder das Federelement ist integraler Bestandteil eines stabförmigen Verbindungselements. Alternativ ist das Federelement mit einem Ende beweglich an der drehbar gelagerten Welle gelagert und mit einem anderen Ende an dem Verbindungselement, so dass bei Rotation der drehbar gelagerten Welle die durch das Kopfteil auf die Innenwand des rotationssymmetrischen Gehäuses ausgeübte Kraft durch das Federelement vorteilhaft eingestellt wird. Bevorzugt sind hier Verbindungelement, Federelement und Welle bzw. ein optional an der Welle angebrachter Flansch dreiecksförmig zueinander angeordnet. Durch diese dreiecksförmige Anordnung kann das Federelement einer durch Rotation der Welle am Verbindungselement entstehenden Fliehkraft entgegenwirken. In einer alternativen Ausführungsform können das Verbindungselement und das Federelement in einem Stück ausgebildet sein, wobei dieses Stück zwischen Verbindungselement und Federelement angewinkelt ist, und am Winkelscheitel sich eine Befestigungsmöglichkeit für eine Drehachse befindet. Befestigt man zwei dieser alternativen Ausführungsformen an der Welle, z.B. mittels eines Flansches welcher an gegenüberliegenden Seiten eine bewegliche Befestigung mittels Drehachsen erlaubt, kann das Ende des Federelements mit dem jeweils anderen Verbindungselement beweglich verbunden werden. Auf diese Weise erhält man ebenfalls die zuvor beschriebene dreiecksförmige Anordnung.

Als Federelement ist prinzipiell jede Art von Federelement geeignet, beispielsweise eine Spiralfeder und/oder ein Schwingungsdämpfer ausgewählt aus Gasdruckdämpfer, Öldruckdämpfer oder Elastomer-Dämpfer.

Das Federelement kann mindestens eine Einstellmöglichkeit aufweisen, beispielsweise eine Zugstufeneinstellung, Druckstufeneinstellung oder eine Federvorspannungseinstellung.

Vorzugsweise weist das Federelement eine Zugstufeneinstellung und/oder Druckstufeneinstellung auf, welche den Vorteil haben, dass die durch das Kopfteil auf die Innenwand des rotationssymmetrischen Gehäuses ausgeübte Kraft einstellbar ist, oder ein Spaltmaß zwischen Kopfteil und der Innenwand des rotationssymmetrischen Gehäuses einstellbar ist, wobei sich das Spaltmaß beim Drehen der gelagerten Welle durch die gewählte Zug- und Druckstufeneinstellung einstellt. Das Prinzip der Zug- und Druckstufeneinstellung ist im Maschinenbau bekannt. Die Zugstufe des Federelements legt fest, wie schnell eine im Federelement befindliche Kolbenstange ausfedert, und wie schnell sich die Feder des Federelements in ihre Ausgangslage zurück entspannt. Die Druckstufe regelt die Eintauchgeschwindigkeit eines Kolbens des Federelements.

Des Weiteren kann das Federelement, alternativ oder zusätzlich zur Zug- und/oder Druckstufeneinstellung, eine Federvorspannungseinstellung aufweisen, wodurch die durch das Kopfteil auf die Innenwand des rotationssymmetrischen Gehäuses ausgeübte Kraft einstellbar ist, oder ein Spaltmaß zwischen Kopfteil und der Innenwand des rotationssymmetrischen Gehäuses einstellbar ist, wobei sich das Spaltmaß beim Drehen der gelagerten Welle durch die gewählte Federvorspannungseinstellung einstellt. Das Prinzip der Federvorspannungseinstellung ist im Maschinenbau bekannt. Durch die Federvorspannung verändert sich der Ausfederweg des Federelements.

Bevorzugt weist das Schlagelement ein Federelement mit einer Zug- und Druckstufeneinstellung auf.

Im Falle eines Schlagelements mit Federelement kann sich das Spaltmaß zwischen Kopfteil und der Innenwand des rotationssymmetrischen Gehäuses bei Drehung der drehbar gelagerten Welle abhängig von der Drehzahl einstellen, das heißt das Spaltmaß verändert sich in Abhängigkeit von der Drehzahl. Im Gegensatz dazu ist im Falle eines Schlagelements mit starrem Verbindungselement das Spaltmaß zwischen Kopfteil und der Innenwand des rotationssymmetrischen Gehäuses unabhängig von der Drehzahl der drehbar gelagerten Welle fest eingestellt, das heißt, das Spaltmaß verändert sich nicht.

Der über die Eintrittsöffnung eingeführte Klärschlamm kann zu der bzw. den Austrittsöffnung(en) mittels eines Neigungswinkels der Innenwand des rotationssymmetrischen Gehäuses befördert werden, welcher eine rutschenartige Beförderung des Klärschlamms ermöglicht. Diese Art der Beförderung hat den Vorteil, dass sie energieeffizient und wartungsarm ist, da keine zusätzlichen Mittel nötig sind, um den Klärschlamm zu befördern. Vorzugsweise ist der Neigungswinkel bis zu 30°, weiter bevorzugt 5° bis 25°, besonders bevorzugt 10° bis 20°. Die Wahl des Neigungswinkels ist unter anderem vom Feuchtegrad bzw. der Konsistenz des Klärschlamms abhängig. Bei der Vorrichtung gemäß der Erfindung kann der Neigungswinkel fest eingestellt, oder variabel einstellbar sein.

Alternativ oder zusätzlich zu dem Neigungswinkel kann der über die Eintrittsöffnung eingeführte Klärschlamm zu der bzw. den Austrittsöffnung(en) mittels einer Pump- und/oder Saugvorrichtung befördert werden.

Vorzugsweise ist mindestens der zur Innenwand des rotationssymmetrischen Gehäuses hin orientierte Teil des Kopfteils oder die Innenwand des rotationssymmetrischen Gehäuses mit elastischem und/oder reibungsverminderndem Material beschichtet. Dies hat den Vorteil, dass der Verschleiß zwischen Kopfteil und Innenwand des rotationssymmetrischen Gehäuses minimiert wird und der Betrieb der Vorrichtung weniger Energie erfordert. Das elastische Material ist bevorzugt ein Elastomer, weiter bevorzugt ein Polyurethan Elastomer, wie zum Beispiel Vulkollan^{®}. Das reibungsvermindernde Material ist bevorzugt Polytetrafluorethylen, wie zum Beispiel Teflon^{®}.

In anderen bevorzugten Varianten der vorliegenden Erfindung ist die Innenwand des Gehäuses mit einem abriebfesten, harten Material beschichtet und/oder die Innenwand des Gehäuses oder sogar die ganze Wand besteht aus einem abriebfesten, harten Material, insbesondere dann, wenn die erfindungsgemäße Vorrichtung bei der Desintegration von Klärschlamm unter Zuhilfenahme von mechanisch wirkenden Desintegrationshilfsstoffen betrieben wird. In dieser Form ist die Gehäuse (Innen-)Wand besonders gut für die Desintegration von Klärschlamm unter Beimengung von mechanisch wirkenden Desintegrationshilfsstoffen und, optional, die gleichzeitige in situ-Zerkleinerung von mechanisch wirkenden Desintegrationshilfsstoffen geeignet.

Bevorzugt wird die drehbar gelagerte Welle mittels eines Motors mit einer Drehzahl von bis zu 300 U/min gedreht, weiter bevorzugt 10 bis 250 U/min, noch weiter bevorzugt 20 bis 200 U/min und besonders bevorzugt 50 bis 150 U/min. Eine geringe Drehzahl bedeutet einen geringen Energiebedarf und geringen Verschleiß der Vorrichtung, aber da dabei die durch die Schlagelemente ausgeübte Fliehkraft und damit der auf die Innenwand des Gehäuses ausgeübte Druck relativ gering sind, ist somit auch der Durchsatz an Klärschlamm in der Vorrichtung vergleichsweise gering. Eine hohe Drehzahl bedeutet einen höheren Energiebedarf und höheren Verschleiß der Vorrichtung, aber da die durch die Schlagelemente ausgeübte Fliehkraft und damit der auf die Innenwand des Gehäuses ausgeübte Druck relativ hoch ist, ist somit auch der Durchsatz an Klärschlamm in der Vorrichtung vergleichsweise hoch.

Unabhängig davon, ob das Kopfteil des Schlagelements die Innenwand des rotationssymmetrischen Gehäuses berührt oder ein Spaltmaß zwischen Kopfteil und der Innenwand des rotationssymmetrischen Gehäuses vorgesehen ist, entsteht ein Druck, und zwar sowohl bei direkter Berührung der Innenwand des rotationssymmetrischen Gehäuses als auch beim Vorsehen des Spaltmaßes, innerhalb des im Spaltmaß befindlichen Klärschlamms. Dieser Druck kann im Wesentlichen durch folgende drei Parameter, die miteinander in Wechselwirkung stehen, vorteilhaft eingestellt werden: Die Drehzahl der gelagerten Welle, das Gewicht des Kopfteils des Schlagelements und optional, bei Vorhandensein eines Schlagelements mit Federelement, die Einstellung des Federelements. Sofern mechanisch wirkende Desintegrationshilfsstoffe mitverwendet werden, kommen diese noch als vierter druckerzeugender Parameter hinzu.

Die Eintrittsöffnung ist bevorzugt durch einen Trichter gebildet.

In weiteren bevorzugten Ausgestaltungen der erfindungsgemäßen Vorrichtung weist diese eine Dosiervorrichtung, z.B. mit einer Zellradschleuse, für mechanisch wirkende Desintegrationshilfsstoffe auf. Diese kann so angeordnet sein, dass in die Eintrittsöffnung und/oder in das Gehäuse dosiert wird.

Durch diese Maßnahme kann unmittelbar mit der Aufgabe des Klärschlamms eine beliebige Dosierung der mechanisch wirkende Desintegrationshilfsstoffe erreicht werden. Diese Dosierung kann kontinuierlich, diskontinuierlich oder auch intermittierend erfolgen.

Im Prinzip können als Desintegrationshilfsstoffe solche Materialien eingesetzt werden, welche dem Desintegrationsprozess bereits mit scharfen Bruchkanten zugegeben werden oder welche diese Bruchkanten beim Desintegrationsprozess erhalten. Dabei sind die Korn- oder Teilchengröße und die Korn- oder Teilchenmasse des Desintegrationsmaterials an die Dimensionen der erfindungsgemäßen Vorrichtung angepasst sind. Die Körper müssen also durch die erfindungsgemäße Vorrichtung in Gegenwart des Klärschlamms bewegt werden können, und dürfen nur so groß sein, dass sie in die Vorrichtung eingebracht und aus ihr, allein oder zusammen mit dem Klärschlamm, ausgetragen werden können.

Wenn sie allein aus der Vorrichtung austragbar sein sollen, sind sie in der Regel so groß, dass sie durch Rückhaltevorrichtungen wie Siebe getrennt werden können. Dies ist der Fall bei relativ großen Körpern.

Im Rahmen der vorliegenden Erfindung wurde jedoch gefunden, dass kleine Körper besonders vorteilhaft sind, weswegen es von Vorteil ist, Material einzusetzen, dessen Korngröße bis zu maximal 10 mm beträgt. In Anlehnung an übliche Konventionen werden solche Körper in der vorliegenden Erfindung auch als Teilchen oder Partikel bezeichnet.

Zwischen der Eintrittsöffnung und der Vielzahl von Schlagelementen ist vorzugsweise ein rotorblattförmiges Dosierelement an der drehbar gelagerten Welle angebracht, dessen Rotorblätter sich radial von der drehbaren Welle in Richtung der Innenwand des Gehäuses erstrecken. Die Rotorblattform des Dosierelements ermöglicht es, den über die Eintrittsöffnung eingebrachten Klärschlamm durch einen Propellereffekt beim Drehen der Welle schneller in Richtung der Schlagelemente zu befördern.

In bevorzugten Varianten der vorliegenden Erfindung ist die Vorrichtung konfiguriert für die Verwendung mit einem mechanisch wirkenden Desintegrationshilfsstoff.

Dazu sind mindestens der zur Innenwand des rotationssymmetrischen Gehäuses hin orientierte Teil des Kopfteils und die Innenwand des rotationssymmetrischen Gehäuses mit hartem, abriebfesten Material beschichtet oder bestehen daraus, anstelle von einer Beschichtung mit einem elastischem und/oder reibungsvermindernden Material, wie dies weiter oben für andere bevorzugte Ausführungsformen der erfindungsgemäß Vorrichtung beschrieben ist.

In anderen bevorzugten Varianten der vorliegenden Erfindung sind mithin zumindest das Schlagelement, das Kopfteil des Schlagelements, das Abkratzelement, die drehbar gelagerte Welle und/oder die Gehäuseinnenwand oder Gehäusewand mit einem abriebfesten, harten Material beschichtet und/oder bestehen aus abriebfesten, harten Material, insbesondere dann, wenn die erfindungsgemäße Vorrichtung bei der Desintegration von Klärschlamm unter Beimengung von mechanisch wirkenden Desintegrationshilfsstoffen betrieben wird. In dieser Form ist die erfindungsgemäße Vorrichtung besonders gut für die Desintegration von Klärschlamm in Gegenwart von mechanisch wirkenden Desintegrationshilfsstoffen und, optional, die gleichzeitige in situ-Zerkleinerung von mechanisch wirkenden Desintegrationshilfsstoffen geeignet.

Selbstverständlich können die einzelnen Elemente, auch wie weiter oben einzeln angesprochen, sowohl mit dem gleichen Material beschichtet sein/daraus bestehen, als auch aus verschiedenen. Ebenso können die einzelnen Elemente nur punktuell mit Material beschichtet sein. So ist es zum Beispiel möglich Edelstahlelemente zu verwenden, die in einzelnen Bereichen Carbide oder Nitride aufweisen.

Des Weiteren kann auch die Vorrichtung der vorliegenden Erfindung noch eine oder mehrere Vorrichtungen zur mechanischen Behandlung des Klärschlamms aufweisen, insbesondere zur Ultraschallbehandlung des Klärschlamms, zur thermischen Behandlung des Klärschlamms, insbesondere Vorrichtungen zur Erhitzung von Teilen der erfindungsgemäßen Vorrichtung, zur biologischen Behandlung des Klärschlamms, sowie zur chemischen Behandlung des Klärschlamms.

Die erfindungsgemäße Vorrichtung kann bei entsprechender Ausstattung mit ausreichend harten Innenwänden des Gehäuses und Kopfteilen der Schlagelemente und/oder der Abkratzelemente die notwendige Teilchengröße der mechanisch wirkenden Desintegrationshilfsstoffe "in situ", also im laufenden Betrieb aus zugegebenen Ausgangsmaterialien, erzeugen, so dass eine Vermischung mit dem Klärschlamm ermöglicht wird.

Die weiter oben in dieser Beschreibung erläuterten Vorteile des erfindungsgemäßen Verfahrens, nämlich der sehr hohe Entwässerungs- und Energieeinsparungsgrad, die erhebliche Reduktion von Transportaufwendungen und Entsorgungskosten, eine sehr hohe Phosphorrückgewinnungsrate, sowie die effektivere und einfachere Trocknung und Verbrennung des bearbeiteten Klärschlamms werden auch für die erfindungsgemäße Vorrichtung in Anspruch genommen.

Obwohl die vorliegende Erfindung im Hinblick auf die mechanische Desintegration von Klärschlamm beschrieben ist, kann die erfindungsgemäße Vorrichtung selbstverständlich auch zur mechanischen Desintegration von anderen Stoffen und/oder Stoffgemischen verwendet werden; eine solche Verwendung ist ebenfalls Gegenstand der vorliegenden Erfindung.

Ebenfalls Gegenstand der vorliegenden Erfindung ist die Verwendung einer erfindungsgemäßen Vorrichtung für die mechanische Desintegration von Klärschlamm.

Im Folgenden wird die Erfindung anhand eines Ausführungsbeispiels unter Bezugnahme auf die beigefügten, schematischen Zeichnungen näher erläutert. Darin zeigen:
Figur 1: eine Seitenansicht der erfindungsgemäßen Vorrichtung mit Durchsicht auf das Innere des Gehäuses der Vorrichtung;
Figur 2: eine Querschnittsansicht des Gehäuses der Vorrichtung gemäß Figur 1;
Figur 3: eine Detailansicht des mit A gekennzeichneten Abschnitts von Figur 2; und
Figur 4: eine schematische Draufsicht auf ein Rollelement 8 mit Führungselementen 16.

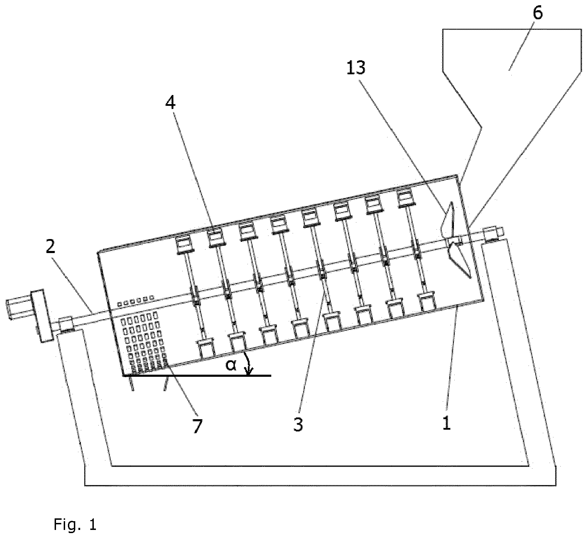

Figur 1 zeigt eine bevorzugte Ausführungsform der erfindungsgemäßen Vorrichtung, welche ein rotationssymmetrisches Gehäuse 1 in Zylinderform aufweist, in welchem eine drehbar gelagerte Welle 2 entlang der Rotationssymmetrieachse des Gehäuses 1 angeordnet ist. An der drehbar gelagerte Welle 2 sind Schlagelemente mit einem Verbindungselement 3 und einem Kopfteil 4 befestigt. Der Klärschlamm wird in die Vorrichtung über eine Eintrittsöffnung 6, die hier mit einem Trichter ausgestattet ist, eingeführt, wobei das rotorblattförmige Dosierelement 13 dazu dient, den Klärschlamm in Richtung der Schlagelemente zu befördern. Die Innenwand des Gehäuses 1 weist einen Neigungswinkel a (alpha) auf, welcher variabel einstellbar ist, und eine rutschenartige Beförderung des Klärschlamms von der Eintrittsöffnung 6 zu der bzw. den Austrittsöffnung(en) 7 ermöglicht.

Versetzt man die Welle 2 in Rotation, bewirkt die Fliehkraft in Abhängigkeit der Wellendrehzahl und des Eigengewichtes der Schlagelemente, insbesondere der Kopfteile 4, dass im Klärschlamm befindliche Zellkörper zerplatzen bzw. desintegriert werden, und zwar durch die mittels der Rotation verursachte Reibung innerhalb des Klärschlamms, durch die Trägheit der Zellen, insbesondere durch in einem Spaltmaß zwischen Kopfteil 4 und Innenwand des Gehäuses 1 verursacht Reibung, oder durch Zerquetschen der Zellkörper zwischen dem Kopfteil 4 und der Innenwand des Gehäuses 2, dadurch dass kein oder nur ein sehr geringes Spaltmaß zwischen Kopfteil 4 und der Innenwand des Gehäuses vorgesehen ist.

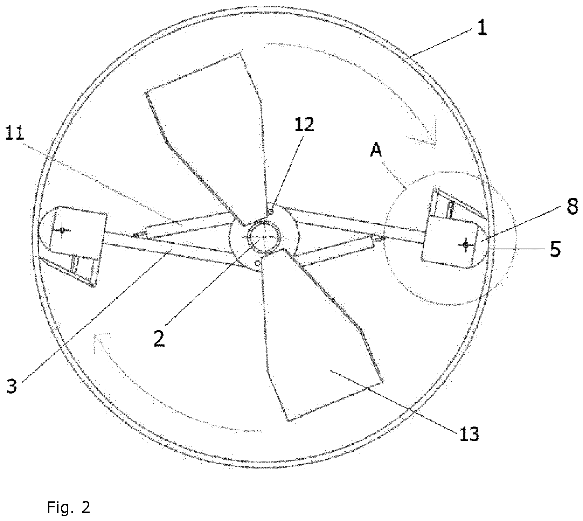

Figur 2 zeigt, wie in der bevorzugten Ausführungsform von Figur 1 das Verbindungselement 3 des Schlagarms mittels Drehachse 12 beweglich an der Welle 2 gelagert ist. Federelemente 11 sind an einem Ende mittels Drehachse 12 ebenfalls beweglich an der Welle 2 gelagert, und am anderen Ende mit einem Verbindungselement 3 verbunden, so dass mittels einer Zug- bzw. Druckeinstellung der Federelemente 11 der durch den drehbaren Rollkörper 8 gegenüber der Innenwand des Gehäuses 1 ausgeübte Anpressdruck eingestellt werden kann. Alternativ kann jedes Federelement 11 so eingestellt werden, dass bei Rotation der Welle 2 ein Spaltmaß 5 zwischen dem drehbaren Rollkörper 8 und der Innenwand des Gehäuses 1 verbleibt. In der hier gezeigten Ausführungsform sind sowohl Verbindungselement 3 als auch Federelement 11 mittels sich gegenüberliegenden, an einem Flansch bereitgestellten Drehachsen 12 befestigt, wobei sich hier zwei an einem Flansch beweglich befestigte Drehachsen 12 gegenüberliegen. Dadurch entsteht eine dreiecksförmige Anordnung zwischen Verbindungelement 3, Federelement 11 und Welle 2 bzw. an der Welle angebrachtem Flansch.

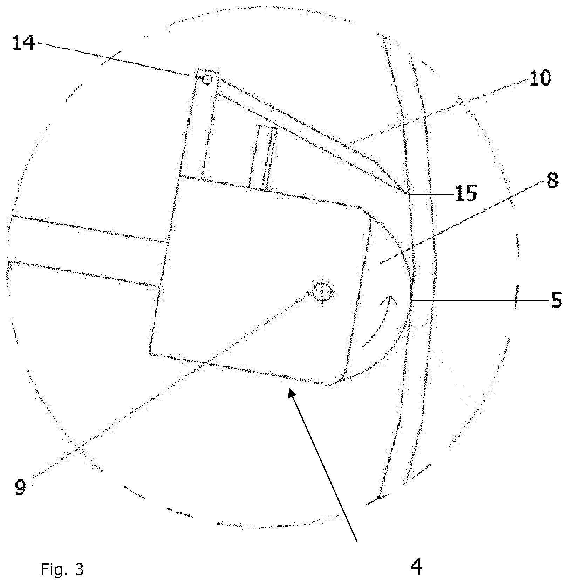

Figur 3 zeigt ein Kopfteil 4, welches ein Abkratzelement 10 aufweist, das über die Drehachse 15 hinsichtlich des Spaltmaßes 15 zwischen Abkratzelement 10 und der Innenwand des Gehäuses 1 einstellbar ist. Das Abkratzelement verhindert einen unerwünschten Materialaufbau nicht flüssiger Partikel des Klärschlamms an der Innenwand des Gehäuses 1. Des Weiteren kann mittels des Abkratzelements 10 im Nachlauf des Rollkörpers 8 durch Schrägstellung (nicht gezeigt) des Abkratzelements 10 das bereits desintegrierte oder teildesintegrierte Klärschlammmaterial zum nächsten Rollkörper 8 oder in Richtung der Austrittsöffnungen 7 verschoben werden.

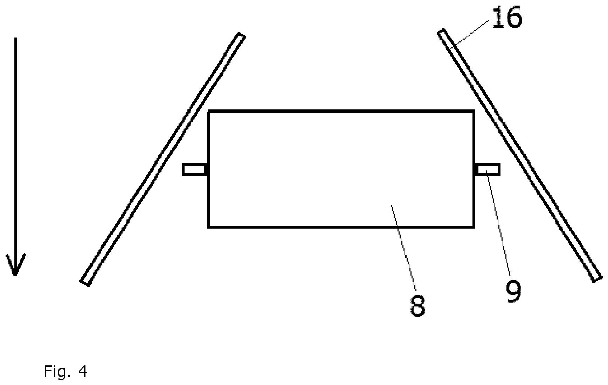

Figur 4 ist eine schematische Draufsicht, unter Weglassung von Details, auf den Rollkörper 8, an welchem jeweils an der Seite, an welcher sich die Drehachsen befinden, zwei flächige Führungselemente 16 angewinkelt angeordnet sind, so dass die Kanten der Führungselemente bei Rotation der Welle 2 den Klärschlamm vor dem Kopfteil 4 pflugartig zusammenführen.

### Bezugszeichenliste

1 rotationssymmetrisches Gehäuse
2 drehbar gelagerte Welle
3 Verbindungselement
4 Kopfteil
5 Spaltmaß zwischen Kopfteil 4 und Innenwand des rotationssymmetrischen Gehäuses 1
6 Eintrittsöffnung
7 Austrittsöffnungen
8 drehbarer Rollkörper
9 Drehachse des drehbaren Rollkörpers 8
10 Abkratzelement
11 Federelement
12 Drehachse des Verbindungselements 3 und/oder Federelements 11
13 Dosierelement
14 Drehachse des Abkratzelements 10
15 Spaltmaß zwischen Abkratzelement 10 und Innenwand des rotationssymmetrischen Gehäuses 1
16 Führungselement
α (alpha) Neigungswinkel

## Patentansprüche

1. Verfahren zur mechanischen Desintegration von Klärschlamm, mit folgenden Verfahrensschritten:
- Einbringen von zu desintegrierendem Klärschlamm in einen Behälter;
- Beaufschlagen des Klärschlamms mit mechanischem Druck und mahlender Reibung;
- Austragen des desintegrierten Klärschlamms aus dem Behälter;
wobei dieses Verfahren **dadurch gekennzeichnet ist, dass** die mechanische Desintegration in dem Behälter unter Zugabe mindestens eines mechanisch wirkenden Desintegrationshilfsstoffs erfolgt.

2. Verfahren nach Anspruch 1,
**dadurch gekennzeichnet, dass**
der mechanisch wirkende Desintegrationshilfsstoff ausgewählt wird aus der Gruppe bestehend aus Sand, Quarzsand, Granitsand, Glas, Keramik, grobkörniger Asche, Verarbeitungsresten aus der Beton- und Keramikherstellung und Mischungen davon, bevorzugt ausgewählt aus der Gruppe bestehend aus Sand, Quarzsand, Granitsand, Glas, Keramik und Mischungen davon besonders bevorzugt jeweils mit einer Teilchengröße von 0,4 mm bis 2,5 mm, noch mehr bevorzugt Quarzsand, insbesondere bevorzugt Quarzsand mit einer Teilchengröße von 0,5 mm bis 2 mm.

3. Verfahren nach Anspruch 1 oder 2,
**dadurch gekennzeichnet, dass**
der mechanisch wirkende Desintegrationshilfsstoff bereits bei der Zugabe zum zu desintegrierenden Klärschlamm möglichst scharfkantige Bruchkanten aufweist oder diese Bruchkanten durch mechanische Einwirkung beim Desintegrationsprozess erhält.

4. Vorrichtung zur mechanischen Desintegration von Klärschlamm, vorzugsweise zur Durchführung des Verfahrens nach einem der Ansprüche 1 bis 3, mit einem rotationssymmetrischen Gehäuse (1), in welchem eine drehbar gelagerte Welle (2) entlang der Rotationssymmetrieachse des rotationssymmetrischen Gehäuses (1) angeordnet ist, wobei die drehbar gelagerte Welle (2) eine Vielzahl von Schlagelementen mit einem Verbindungselement (3) und einem Kopfteil (4) aufweist, wobei das Verbindungselement (3) das Kopfteil (4) mit der Welle verbindet, und das Kopfteil (4) die Innenwand des rotationssymmetrischen Gehäuses (1) berührt oder ein Spaltmaß (5) zwischen Kopfteil (4) und der Innenwand des rotationssymmetrischen Gehäuses (1) vorgesehen ist, wobei an dem rotationssymmetrischen Gehäuse (1) eine Eintrittsöffnung (6) zum Einführen von Klärschlamm und eine oder mehrere Austrittsöffnung(en) (7) zum Austritt von desintegriertem Klärschlamm angeordnet sind, und die Eintrittsöffnung (6) und Austrittsöffnung(en) (7) so an dem Gehäuse angeordnet sind, dass sich dazwischen mindestens ein Teil der Schlagelemente befindet, wobei der über die Eintrittsöffnung (6) eingeführte Klärschlamm zu der bzw. den Austrittsöffnung(en) (7) befördert wird und dabei durch Drehen der Welle (2) mittels der Schlagelemente desintegriert wird.

5. Vorrichtung nach Anspruch 4,
wobei das rotationssymmetrische Gehäuse (1) zylindrisch, kegelförmig o-derkegelstumpfförmig ist, bevorzugt zylindrisch.

6. Vorrichtung nach Anspruch 4 oder 5,
wobei das Spaltmaß (5)
a) bis zu 0,5 mm ist, bevorzugt 0,1 bis 100 µm, weiter bevorzugt 0,5 bis 50 µm, besonders bevorzugt 1 bis 10 µm
oder
b) bis zu 5 mm ist, bevorzugt 0,05 mm bis 3,5 mm, weiter bevorzugt 0,2 mm bis 2,5 mm, besonders bevorzugt 0,4 mm bis 2,1 mm.

7. Vorrichtung nach einem der Ansprüche 4 bis 6,
wobei
a) das Kopfteil (4) des Schlagelements einen drehbaren Rollkörper (8) mit einer Drehachse (9) im Wesentlichen parallel zur Rotationssymmetrieachse des rotationssymmetrischen Gehäuses (2) aufweist; bevorzugt ist der drehbare Rollkörper (8) zylindrisch, kegelförmig oder kegelstumpfförmig, weiter bevorzugt zylindrisch, oder
b) das Kopfteil (4) des Schlagelements ein zylindrischer, kegelförmiger, kegelstumpfförmiger oder keilförmiger starrer Körper ist, bevorzugt ein keilförmiger oder zylindrischer starrer Körper, weiter bevorzugt ein zylindrischer starrer Körper.

8. Vorrichtung nach einem der Ansprüche 4 bis 7,
wobei jeweils seitlich vom Kopfteil (4) Führungselemente (16) angewinkelt angeordnet sind, so dass die Führungselemente (16) bei Rotation der drehbar gelagerten Welle (2) den Klärschlamm vor dem Kopfteil (4) zusammenführen.

9. Vorrichtung nach einem der Ansprüche 4 bis 8,
wobei das Schlagelement ein Abkratzelement (10) aufweist, welches an dem Verbindungselement (3) oder an dem Kopfteil (4) angebracht ist und so gestaltet ist, dass es mit einer Kante in Berührung mit der Innenwand des rotationssymmetrischen Gehäuses (1) kommt oder ein Spaltmaß (15) zwischen einer Kante des Abkratzelements (10) und der Innenwand des rotationssymmetrischen Gehäuses (1) vorgesehen ist, um bei Rotation der drehbar gelagerten Welle (2) mit der Kante Klärschlamm von der Innenwand des rotationssymmetrischen Gehäuses (1) abzukratzen, und wobei optional die Kante des Abkratzelements (10) im Wesentlichen parallel zur Drehachse des rotationssymmetrischen Gehäuses (1) ausgerichtet ist.

10. Vorrichtung nach Anspruch 9,
wobei das Abkratzelement (10) starr oder einstellbar an dem Verbindungselement (3) oder dem Kopfteil (4) angebracht ist, bevorzugt einstellbar, um einen Ausrichtwinkel der Kante des Abkratzelements (10) so zu verändern, dass der Klärschlamm durch das Abkratzelement (10) zum nächsten Kopfteil (4) oder zu(r) Austrittsöffnung(en) (7) gelenkt wird.

11. Vorrichtung nach einem der Ansprüche 4 bis 10,
wobei das Verbindungselement (3)
a) ein starrer Körper ist, bevorzugt ein stabförmiger starrer Körper, oder
b) an der drehbar gelagerten Welle (2) beweglich gelagert ist, bevorzugt durch eine Drehachse (12) im Wesentlichen parallel zur Rotationssymmetrieachse des rotationssymmetrischen Gehäuses (1) beweglich gelagert.

12. Vorrichtung nach einem der Ansprüche 4 bis 11,
wobei das Verbindungselement (3) ein Federelement (11) aufweist, bevorzugt ein Federelement (11) mit mindestens einer Einstellmöglichkeit ausgewählt aus Zugstufeneinstellung, Druckstufeneinstellung und Federvorspannungseinstellung, weiter bevorzugt ein Federelement (11) mit Zug- und Druckstufeneinstellung.

13. Vorrichtung nach einem der Ansprüche 4 bis 12,
wobei der über die Eintrittsöffnung (6) eingeführte Klärschlamm zu der bzw. den Austrittsöffnung(en) (7) mittels eines Neigungswinkels (o) der Innenwand des rotationssymmetrischen Gehäuses (1) befördert wird, welcher eine rutschenartige Beförderung des Klärschlamms ermöglicht; bevorzugt ist der Neigungswinkel (α) bis zu 30° ist, weiter bevorzugt 5° bis 25°, besonders bevorzugt 10° bis 20°; und/oder
der über die Eintrittsöffnung (6) eingeführte Klärschlamm zu der bzw. den Austrittsöffnung(en) (7) mittels einer Pump- und/oder Saugvorrichtung befördert wird.

14. Vorrichtung nach einem der Ansprüche 4 bis 13,
wobei
a) mindestens der zur Innenwand des rotationssymmetrischen Gehäuses (1) hin orientierte Teil des Kopfteils (4) oder die Innenwand des rotationssymmetrischen Gehäuses (1) mit elastischem und/oder reibungsvermindernden Material beschichtet ist, bevorzugt ist das Material ein Polyurethan-Elastomer oder Polytetrafluorethylen,
oder
b) mindestens der zur Innenwand des rotationssymmetrischen Gehäuses (1) hin orientierte Teil des Kopfteils (4) und die Innenwand des rotationssymmetrischen Gehäuses (1) mit hartem, abriebfesten Material beschichtet sind oder daraus bestehen, bevorzugt ist das Material ein Edelstahl.

15. Verwendung einer Vorrichtung gemäß einem der Ansprüche 4 bis 14 für die mechanische Desintegration von Klärschlamm, bevorzugt einer für die Verwendung eines mit mechanisch wirkenden Desintegrationshilfsstoffen konfigurierten Verfahrens nach einem der Ansprüche 1 bis 3, insbesondere mit besonders bevorzugt einer solchen Vorrichtung, bei der mindestens der zur Innenwand des rotationssymmetrischen Gehäuses hin orientierte Teil des Kopfteils und die Innenwand des rotationssymmetrischen Gehäuses mit hartem, abriebfesten Material, insbesondere Edelstahl, beschichtet sind oder daraus bestehen.
